# EUROPÄISCHE PATENTSCHRIFT

(11) **EP 3 405 694 B1**
(45) Veröffentlichungstag und Bekanntmachung des Hinweises auf die Patenterteilung: **04.03.2020**
(21) Anmeldenummer: 17700691.3
(22) Anmeldetag: 19.01.2017
(51) Int. Cl.: F16F 9/512, F16F 9/348

(54) **SCHWINGUNGSDÄMPFER MIT FREQUENZABHÄNGIG ARBEITENDER VENTILANORDNUNG**
VIBRATION DAMPER COMPRISING A VALVE ARRANGEMENT OPERATING IN A FREQUENCY-DEPENDENT MANNER
AMORTISSEUR DE VIBRATIONS DOTÉ D'UN ENSEMBLE SOUPAPE FONCTIONNANT EN FONCTION DE LA FRÉQUENCE

(30) Priorität: 22.01.2016 DE 102016200935
(43) Veröffentlichungstag der Anmeldung: 28.11.2018
(73) Patentinhaber: ThyssenKrupp Bilstein GmbH, 58256 Ennepetal (DE); thyssenkrupp AG, 45143 Essen (DE)
(72) Erfinder: SCHNEIDER, Jürgen, 58640 Iserlohn (DE)
(74) Vertreter: thyssenkrupp Intellectual Property GmbH
(86) Internationale Anmeldenummer: PCT/EP2017/051058
(87) Internationale Veröffentlichungsnummer: WO 2017/125478

(56) Entgegenhaltungen:
- EP-B1- 1 442 227
- JP-A- H06 207 636

## Beschreibung

Die Erfindung betrifft einen Schwingungsdämpfer mit einem Dämpferrohr, einer Kolbenstange, die in einer Zugstufenbewegung aus dem Dämpferrohr heraus und in einer Druckstufenbewegung in das Dämpferrohr (1) hinein oszillierend bewegbar ist, wobei das Dämpferrohr in einen kolbenstangenseitigen Arbeitsraum und einen kolbenstangenfernen Arbeitsraum unterteilt ist. Der Schwingungsdämpfer weist weiter eine mit der Kolbenstange mitbewegbare Ventilanordnung auf. Die Ventilanordnung weist ein in einer Zugstufenbewegung der Kolbenstange wirksames Zugstufen-Dämpfungsventil und ein in einer Druckstufenbewegung der Kolbenstange wirksames Druckstufen-Dämpfungsventil auf. Dem Zugstufen-Dämpfungsventil ist ein erster Druckraum zugeordnet, der hydraulisch mit dem kolbenstangenseitigen Arbeitsraum verbunden ist. Der Schwingungsdämpfer umfasst weiter eine Einrichtung zur Änderung einer Vorspannung des Zugstufen-Dämpfungsventils in Abhängigkeit von einer Frequenz der Kolbenstangenbewegung, wobei die Einrichtung ein Betätigungselement aufweist, welches von einem sich in dem ersten Druckraum infolge einer Zugstufenbewegung der Kolbenstange frequenzabhängig einstellenden Druck beaufschlagbar und derart verstellbar ist, dass die Vorspannung des Zugstufen-Dämpfungsventils vergrößert wird.

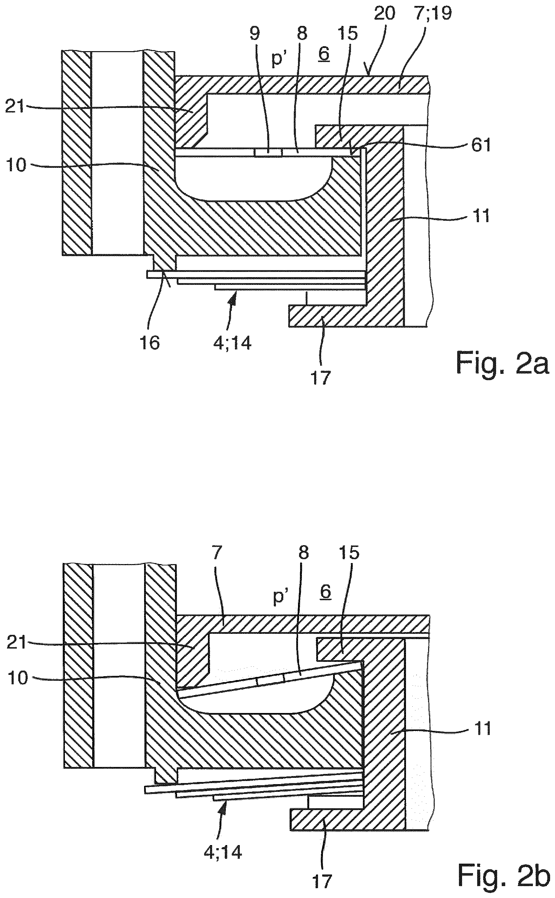

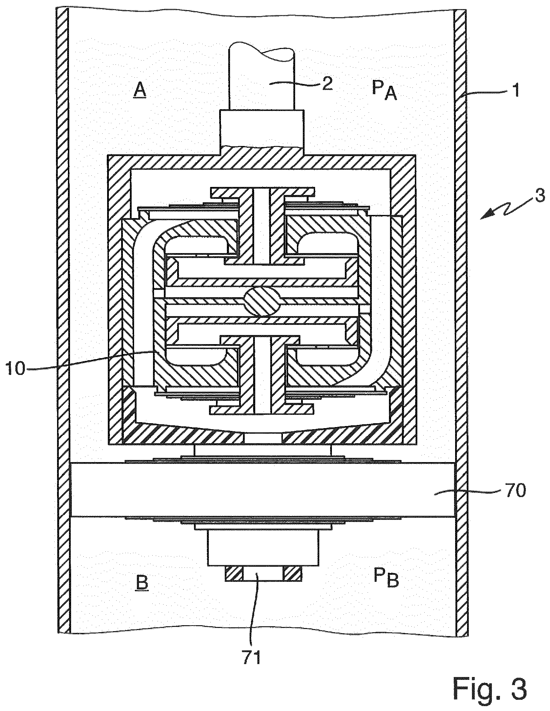

Ein derartiger Schwingungsdämpfer ist aus der Druckschrift EP 1 442 227 B1 bekannt. Bei diesem bekannten Schwingungsdämpfer ist das Zugstufen-Dämpfungsventil als Federscheibenventil und das Betätigungselement als ein starrer Ventilkörper (valve body 18; vgl. Ausführungsform nach Fig. 2, 2a, 2b) oder als verformbare Scheibe (deformable plate 51; vgl. Ausführungsform nach Fig. 3, 3a, 3b) ausgebildet. Der Ventilkörper bzw. die Scheibe verschiebt sich infolge des sich in dem ersten Druckraum (Fig. 2: auxiliary chamber 22; Fig. 3: auxiliary chamber 42) frequenzabhängig ausbildenden Drucks in Axialrichtung des Dämpferrohrs. Durch diese Verschiebung wird die Vorspannung der Federscheibe (Fig. 2: valve 14; Fig. 3: closing plate 46) des Zugstufen-Dämpfungsventils erhöht.

Nachteilig an den aus der EP 1 442 227 B1 bekannten Lösungen ist, dass stets ein als "diaphragm" bezeichnetes flexibles, membranartiges Element erforderlich ist, um die Verstellbewegung des Betätigungselements zu bewirken. Derartige flexible Elemente können infolge der im Schwingungsdämpferbetrieb auftretenden hochfrequenten Wechselbeanspruchungen verschleißen, wodurch die ordnungsgemäße Funktion des Betätigungselements und damit des Schwingungsdämpfers nicht mehr gewährleistet wäre. Weiter ist nachteilig, dass die Verstellbewegung des Betätigungselements direkt, "eins-zu-eins" (d.h. ohne Verstärkung oder Übersetzung) auf die Federscheibe des Zugstufen-Dämpfungsventils übertragen wird. Daher sind relativ große Drücke in dem ersten Druckraum erforderlich sind, um die Verstellbewegung des Betätigungselements herbei zu führen. Schließlich ist nachteilig, dass der aus der EP 1 442 227 B1 bekannte Schwingungsdämpfer ein von der Frequenz der Kolbenstangenbewegung abhängiges Dämpfungsverhalten ausschließlich in Zugrichtung, d.h. bei einer Ausfahrbewegung der Kolbenstange aus dem Dämpferrohr, aufweist. Eine vergleichbare Anordnung der auf das Zugstufen-Dämpfungsventil einwirkenden Einrichtung ist in Bezug auf das Druckstufen-Dämpfungsventil in der EP 1 442 227 B1 nicht offenbart.

Aus der DE 10 2014 210 702 A1 ist eine Dämpferventilanordnung für einen Schwingungsdämpfer bekannt.
Aus der US 2015 0 041 269 A1 ist eine Kolbenventilanordnung für einen Stoßdämpfer bekannt.
Aus der US 2015 0 053 518 A1 ist ein Stoßdämpfer mit einem frequenzabhängigen passiven Ventil bekannt.
Aus der DE 15 05 608 A ist eine stufenlos regelbare Dämpfungsvorrichtung, insbesondere für hydropneumatische Federbeine.

Der vorliegenden Erfindung liegt die Aufgabe zu Grunde, einen Schwingungsdämpfer der eingangs genannten Art zur Verfügung zu stellen, bei dem die vorstehenden Nachteile vermieden werden. Die Einrichtung zur Änderung einer Vorspannung des Zugstufen-Dämpfungsventils soll feinfühlig arbeiten, so dass bereits relativ geringe frequenzabhängige Druckänderungen zu einer Beeinflussung des Dämpfungsverhaltens führen. Für die Erzeugung einer Verstellbewegung des Betätigungselements sollen relativ geringe Druckanstiege in dem ersten Druckraum ausreichen. Relativ kleine Verstellbewegungen des Betätigungselements, oder anders ausgedrückt, relativ geringe Verstellkräfte sollen zu deutlichen Änderungen der Vorspannung des Zugstufen-Dämpfungsventils führen. Der erfindungsgemäße Schwingungsdämpfer soll in beiden Bewegungsrichtungen der Kolbenstange (also in der Zug- und in der Druckstufe) ein von der Frequenz der Kolbenstangenoszillation abhängiges Dämpfungsverhalten aufweisen können, das auf konstruktiv einfache Weise erreicht werden kann.

Erfindungsgemäß werden die vorstehenden Aufgaben dadurch gelöst, dass die Einrichtung zur Änderung einer Vorspannung des Zugstufen-Dämpfungsventils ein Hebelelement aufweist, wobei durch das Hebelelement eine Verstellbewegung des Betätigungselements in eine die Vorspannung des Zugstufen-Dämpfungsventils erhöhende zusätzliche Vorspannkraft übersetzbar ist.

Das Zugstufen-Dämpfungsventil weist bei stillstehender Kolbenstange bereits eine gewisse Grundvorspannung auf. Das Hebelelement hat erfindungsgemäß im Wesentlichen zwei Aufgaben. Zum einen soll es die Verstellbewegung des Betätigungselements auf das Zugstufen-Dämpfungsventil übertragen. Zum anderen soll es durch eine Hebelwirkung die Kraft, mit der das Betätigungselement auf das Hebelelement einwirkt, verstärken und in eine in Schließrichtung des Zugstufen-Dämpfungsventils wirkende zusätzliche Vorspannkraft übersetzen. Diese zusätzliche Vorspannkraft bewirkt, dass sich das Zugstufen-Dämpfungsventil erst bei höheren Druckdifferenzen öffnet als in dem Zustand mit der niedrigeren Grundvorspannung.

Die erfindungsgemäße Einrichtung zur Änderung einer Vorspannung des Zugstufen-Dämpfungsventils in Abhängigkeit von einer Frequenz der Kolbenstangenbewegung weist ein Betätigungselement auf, welches eine von der Frequenz der Kolbenstangenbewegung abhängige Verstellbewegung ausführt. Diese Verstellbewegung wird ausgelöst durch eine Änderung des Drucks in dem ersten Druckraum, welcher hydraulisch mit dem kolbenstangenseitigen Arbeitsraum verbunden ist. Die Verstellbewegung des Betätigungselements ist deswegen abhängig von der Frequenz der Kolbenstangenbewegung, weil sich der Druck in dem ersten Druckraum in Abhängigkeit von der Frequenz der Kolbenstangenbewegung ändert. Diese Frequenzabhängigkeit soll im Folgenden für eine Zugstufenbewegung der Kolbenstange genauer beschrieben werden.

Wenn die Frequenz der Kolbenstangenbewegung niedrig ist, d.h. wenn eine langsame Zugstufenbewegung der Kolbenstange erfolgt, dann fließt relativ viel Dämpfungsfluid in den ersten Druckraum und es steht viel Zeit für einen Aufbau des Drucks in dem ersten Druckraum zur Verfügung. In dem ersten Druckraum baut sich dann ein relativ hoher Druck auf. Der Druck in dem ersten Druckraum nähert sich dabei an den Druck an, der in dem kolbenstangenseitigen Arbeitsraum vorliegt. Der relativ hohe Druck in dem ersten Druckraum wirkt auf das Betätigungselement ein und arbeitet gegen den Druck, der in dem kolbenstangenfernen Arbeitsraum vorliegt. Denn das Betätigungselement wird auf seiner dem ersten Druckraum gegenüberliegenden Oberfläche von dem Druck beaufschlagt, der in dem kolbenstangenfernen Arbeitsraum des Schwingungsdämpfers vorliegt. Da der Druck in dem ersten Druckraum bei einer Zugstufenbewegung der Kolbenstange größer ist als der in dem kolbenstangenfernen Arbeitsraum vorliegende Druck führt das Betätigungselement eine Verstellbewegung in Richtung des Hebelelements aus. Weil sich bei einer niedrigen Kolbenstangenfrequenz, also bei einer langsamen Bewegung der Kolbenstange in Zugrichtung, ein relativ großer Druck in dem ersten Druckraum ausbildet, ist die Differenz zwischen dem Druck in dem ersten Druckraum und dem Druck in dem kolbenstangenfernen Arbeitsraum relativ groß. Diese relativ große Druckdifferenz bewirkt eine relativ große Verstellbewegung des Betätigungselements in Richtung Hebelelement. Dementsprechend wirkt auf das Hebelelement eine relativ große Verstellkraft ein, die zu einer relativ großen Auslenkung des Hebelelements führt. Durch die Hebelwirkung des Hebelelements wird die relativ große Verstellkraft übersetzt in eine die Vorspannung des Zugstufen-Dämpfungsventils relativ stark erhöhende zusätzliche Vorspannkraft des Zugstufen-Dämpfungsventils. Es ergibt sich somit bei niedrigen Kolbenstangenfrequenzen, also bei langsamen Zugstufenbewegungen der Kolbenstange, eine relativ starke Vorspannungserhöhung des Zugstufen-Dämpfungsventils. Die große Vorspannung des Zugstufen-Dämpfungsventils hat zur Folge, dass das Zugstufen-Dämpfungsventil erst bei hohen Druckdifferenzen öffnet und dementsprechend große Dämpfungskräfte in der Zugstufe erzeugt werden.

Wenn die Frequenz der Kolbenstangenbewegung hoch ist, d.h. wenn eine schnelle Zugstufenbewegung der Kolbenstange erfolgt, dann fließt relativ wenig Dämpfungsfluid in den ersten Druckraum und es steht wenig Zeit für einen Aufbau des Drucks in dem ersten Druckraum zur Verfügung. In dem ersten Druckraum baut sich dann ein relativ niedriger Druck auf. Der Druck in dem ersten Druckraum kann sich dabei nicht an den Druck annähern, der in dem kolbenstangenseitigen Arbeitsraum vorliegt. Der relativ geringe Druck in dem ersten Druckraum wirkt auf das Betätigungselement ein und arbeitet gegen den Druck, der in dem kolbenstangenfernen Arbeitsraum vorliegt. Denn das Betätigungselement wird auf seiner dem ersten Druckraum gegenüberliegenden Oberfläche von dem Druck beaufschlagt, der in dem kolbenstangenfernen Arbeitsraum des Schwingungsdämpfers vorliegt. Da der Druck in dem ersten Druckraum auch bei einer schnellen Zugstufenbewegung der Kolbenstange größer ist als der in dem kolbenstangenfernen Arbeitsraum vorliegende Druck führt das Betätigungselement auch bei schnellen Kolbenstangenbewegungen in Zugrichtung eine Verstellbewegung in Richtung des Hebelelements aus. Weil sich bei einer hohen Kolbenstangenfrequenz, also bei einer schnellen Bewegung der Kolbenstange in Zugrichtung, ein relativ niedriger Druck in dem ersten Druckraum ausbildet, ist die Differenz zwischen dem Druck in dem ersten Druckraum und dem Druck in dem kolbenstangenfernen Arbeitsraum relativ klein. Diese relativ kleine Druckdifferenz bewirkt eine relativ kleine Verstellbewegung des Betätigungselements in Richtung Hebelelement. Dementsprechend wirkt auf das Hebelelement eine relativ kleine Verstellkraft ein, die zu einer relativ kleinen Auslenkung des Hebelelements führt. Durch die Hebelwirkung des Hebelelements wird die relativ kleine Verstellkraft übersetzt in eine die Vorspannung des Zugstufen-Dämpfungsventils relativ gering erhöhende zusätzliche Vorspannkraft des Zugstufen-Dämpfungsventils. Es ergibt sich somit bei hohen Kolbenstangenfrequenzen, also bei schnellen Zugstufenbewegungen der Kolbenstange, eine relativ geringe Vorspannungserhöhung des Zugstufen-Dämpfungsventils. Die geringe Vorspannung des Zugstufen-Dämpfungsventils hat zur Folge, dass das Zugstufen-Dämpfungsventil bereits bei geringen Druckdifferenzen öffnet und dementsprechend kleine Dämpfungskräfte in der Zugstufe erzeugt werden.

Zusätzlich zu dem vorstehend beschriebenen ersten Druckraum und der Einrichtung zur Änderung einer Vorspannung des Zugstufen-Dämpfungsventils in Abhängigkeit von einer Frequenz der Kolbenstangenbewegung kann der erfindungsgemäße Schwingungsdämpfer einen zweiten Druckraum, der hydraulisch mit dem kolbenstangenfernen Arbeitsraum verbunden ist, und eine Einrichtung zur Änderung einer Vorspannung des Druckstufen-Dämpfungsventils in Abhängigkeit von einer Frequenz der Kolbenstangenbewegung aufweisen. Ein solcher Schwingungsdämpfer besitzt dann ein von der Frequenz der Kolbenstangenbewegung abhängiges Dämpfungsverhalten sowohl in Zugrichtung als auch in Druckrichtung, also sowohl bei aus dem Dämpferrohr ausfahrender als auch bei in das Dämpferrohr einfahrender Kolbenstange.

Das von der Frequenz der Kolbenstangenbewegung abhängige Dämpfungsverhalten wird abgekürzt auch als "frequenzabhängiges Dämpfungsverhalten", frequenzabhängige Dämpfung", "frequenzselektives Dämpfungsverhalten" oder "frequenzselektive Dämpfung" bezeichnet.

Die voranstehende Beschreibung der frequenzabhängigen Veränderung der Vorspannung des Zugstufen-Dämpfungsventils und des frequenzabhängigen Dämpfungsverhaltens des Zugstufen-Dämpfungsventils bei einer Zugstufenbewegung der Kolbenstange gilt analog auch für die frequenzabhängige Veränderung der Vorspannung des Druckstufen-Dämpfungsventils und das frequenzabhängige Dämpfungsverhalten des Druckstufen-Dämpfungsventils bei einer Druckstufenbewegung der Kolbenstange. Zur Vermeidung von Wiederholungen wird auf eine zu der Zugstufe analoge, ausführliche Beschreibung der identischen Funktionsweise in der Druckstufe verzichtet.

Gemäß einer Ausführungsform der Erfindung ist das Hebelelement kreisringförmig ausgebildet und weist einen Außendurchmesser und einen Innendurchmesser sowie eine Druckausgleichsöffnung auf. Die Druckausgleichsöffnung stellt sicher, dass auf beiden Seiten des Hebelelements derselbe Druck vorliegt. Auf diese Weise wird erreicht, dass die von dem Betätigungselement auf das Hebelelement einwirkende Verstellkraft nicht gegen ein Druckpolster arbeiten muss und somit nicht an Wirkung verliert, sondern die gesamte Verstellkraft steht unvermindert zur Einwirkung auf das Hebelelement zur Verfügung. Die Verstellkraft kann somit ohne Wirkungsverlust auf das Hebelelement einwirken. Wegen der Druckausgleichsöffnung kann sich auf der von dem Betätigungselement abgewandten Seite des Hebelelements kein Druckpolster aufbauen, das einen höheren Druck aufweist als der Druck, der auf der dem Betätigungselement zugewandten Seite des Hebelelements vorliegt. Daher wird von dem im ersten Druckraum aufgebauten Druck wird kein Anteil benötigt, um einen auf der vom Betätigungselement abgewandten Seite des Hebelelements vorliegenden Überdruck zu überwinden. Das Betätigungselement kann dementsprechend feinfühlig auf das Hebelelement einwirken. Bereits kleine Druckänderungen in dem ersten Druckraum bewirken somit entsprechende Verstellbewegungen des Betätigungselements.

Gemäß einer Ausführungsform der Erfindung sind das Hebelelement und das Betätigungselement in einem hohlzylindrischen Bereich des Ventilkörpers angeordnet, wobei das Betätigungselement infolge einer Erhöhung des Drucks in dem ersten Druckraum in Richtung Hebelelement verschiebbar ist. Durch die gemeinsame Anordnung von Betätigungselement und Hebelelement in einem gemeinsamen hohlzylindrischen Bereich des Ventilkörpers wird auf konstruktiv einfache Weise erreicht, dass das Betätigungselement eine große kreisförmige Fläche aufweist, welche vollständig von dem in dem ersten Druckraum aufgebauten Druck beaufschlagbar ist. Auf diese Weise können bereits geringe Druckanstiege in dem ersten Druckraum Verstellbewegungen des Betätigungselements in Richtung Hebelelement bewirken. Bereits kleine Druckanstiege in dem ersten Druckraum bewirken Verstellkräfte, die auf das Hebelelement einwirken und zu spürbaren Änderungen der Vorspannung des Zugstufen-Dämpfungsventils führen. Weiterhin ermöglicht die Anordnung des Betätigungselements und des Hebelelements in einem gemeinsamen hohlzylindrischen Bereich des Ventilkörpers, dass die von dem Betätigungselement auf das Hebelelement einwirkende Verstellkraft radial außen auf den Außenrand des kreisscheibenförmigen Hebelelements einwirken kann. Auf diese Weise steht ein möglichst großer Hebelarm zur Verfügung, um die Verstellbewegung des Betätigungselements und somit die von dem Betätigungselement auf das Hebelelement einwirkende Verstellkraft in eine die Vorspannung des Zugstufen-Dämpfungsventils erhöhende zusätzliche Vorspannkraft zu übersetzen.

Gemäß einer Ausführungsform der Erfindung weist das Betätigungselement einen kreisscheibenförmigen Grundkörper mit einer Grundfläche auf, wobei die Grundfläche durch den sich in dem ersten Druckraum infolge einer Zugstufenbewegung der Kolbenstange frequenzabhängig einstellenden Druck beaufschlagbar ist. Der Durchmesser des kreisscheibenförmigen Grundkörpers und damit der Durchmesser der druckbeaufschlagbaren kreisförmigen Grundfläche des Grundkörpers wird dabei bevorzugt so dimensioniert, dass er dem Außendurchmesser des Hebelelements entspricht. Auf diese Weise wird ein maximal großer Hebelarm für die Übersetzung einer Verstellbewegung des Betätigungselements (und damit für die Übersetzung der von dem Betätigungselement auf das Hebeelement einwirkenden Verstellkraft) in eine die Vorspannung des Zugstufen-Dämpfungsventils erhöhende zusätzliche Vorspannkraft erreicht. Bereits kleine Verstellbewegungen und damit kleine auf das Hebeelement einwirkende Kräfte können durch das Hebeelement somit in eine zusätzliche Vorspannkraft für das Zugstufen-Dämpfungsventil übersetzt werden.

Erfindungsgemäß kann das Betätigungselement einen sich von dem Grundkörper des Betätigungselements aus in Richtung Hebelelement erstreckenden hohlzylindrischen Mantel aufweisen, wobei eine Stirnfläche des hohlzylindrischen Mantels dem Hebelelement zugewandt ist. Vorteilhaft entspricht dabei der Durchmesser des hohlzylindrischen Mantels dem Außendurchmesser des Hebelelements. Alternativ kann anstelle des hohlzylindrischen Mantels vorgesehen sein, dass das Betätigungselement mehrere über den Umfang seines Grundkörpers verteilt angeordnete Stegelemente aufweist, wobei die Stirnflächen der Stegelemente dem Hebelelement zugewandt sind. Vorteilhaft entspricht dabei der Durchmesser des Umfangskreises, auf dem die Stegelemente verteilt angeordnet sind, dem Außendurchmesser des Hebelelements. Der hohlzylindrische Mantel bzw. die Stegelemente wirken mit ihren Stirnflächen auf das Hebelelement im Bereich des Außendurchmessers des Hebelelements ein. Dadurch wird auf konstruktiv einfache Weise erreicht, dass die Einleitung der Verstellkraft in das Hebelelement so erfolgt, dass ein maximal großer Hebelarm für die Übersetzung der Verstellbewegung respektive der Verstellkraft in eine die Vorspannung des Zugstufen-Dämpfungsventils erhöhende zusätzliche Vorspannkraft zur Verfügung steht.

Gemäß einer Ausführungsform der Erfindung ist ein Klemmelement vorgesehen, welches in Axialrichtung des Dämpferrohrs verschiebbar in einer Bohrung des Ventilkörpers angeordnet ist, wobei das Hebelelement an seinem Innendurchmesser in Axialrichtung zumindest formschlüssig zwischen dem Klemmelement und dem Ventilkörper gehalten ist. Auf konstruktiv einfache Weise kann das Hebelelement formschlüssig zwischen dem Klemmelement und dem Ventilkörper durch einen ersten Klemmkragen gehalten werden, der an dem Klemmelement angeordnet ist. Vorzugsweise ist das kreisscheibenförmige Hebelelement an seinem Innendurchmesser zwischen dem ersten Klemmkragen des Klemmelements und dem Ventilkörper in Axialrichtung formschlüssig gehalten.

Gemäß einer Ausführungsform der Erfindung weist das Zugstufen-Dämpfungsventil ein Ventilscheibenpaket auf, und das Klemmelement weist einen zweiten Klemmkragen auf. Das Ventilscheibenpaket ist dabei zwischen dem zweiten Klemmkragen und einem an dem Ventilkörper ausgebildeten Ventilsitz unter Vorspannung gehalten. Durch diese Anordnung kann eine Verstellbewegung des Betätigungselements über das Hebelelement auf das Klemmelement derart übertragen werden, dass das Klemmelement in Axialrichtung des Dämpferrohrs relativ zu dem Ventilkörper verschoben und dadurch die Vorspannung des Zugstufen-Dämpfungsventils erhöht wird.

Erfindungsgemäß wird eine Verstellbewegung, die von dem Betätigungselement auf das Hebelelement einwirkt, von dem Hebelelement auf das Klemmelement übertragen. Das Klemmelement dient dabei dazu, die von dem Hebelelement durch den Hebelarm übersetzte Verstellkraft auf das Zugstufen-Dämpfungsventil zu übertragen. In der vorstehend beschriebenen Ausgestaltung, in der das Klemmelement in Axialrichtung des Dämpferrohrs verschiebbar in einer Bohrung des Ventilkörpers angeordnet ist und zwei Klemmkragen aufweist, wobei durch den ersten Klemmkragen das kreisscheibenförmige Hebelelement an seinem Innendurchmesser zwischen dem ersten Klemmkragen und dem Ventilkörper in Axialrichtung zumindest formschlüssig gehalten ist und durch den zweiten Klemmkragen das Ventilscheibenpaket des Zugstufen-Dämpfungsventils zwischen dem zweiten Klemmkragen und einem an dem Ventilkörper ausgebildeten Ventilsitz unter Vorspannung gehalten ist, überträgt das Klemmelement auf die Ventilscheiben des Zugstufen-Dämpfungsventils eine Kraft, die aufgrund des wirksamen Hebelarms des Hebelelements deutlich größer ist als die Kraft, die von dem Betätigungselement auf das Hebelelement einwirkt. Daher bewirken bereits relativ geringe Verstellbewegungen des Betätigungselements in Richtung Hebelelement, welche auch nur relativ geringe Kräfte in das Hebelelement einleiten, bereits deutliche Erhöhungen der Vorspannung des Zugstufen-Dämpfungsventils.

Um zu erreichen, dass der erfindungsgemäße Schwingungsdämpfer nicht nur in der Zugstufe, sondern auch in der Druckstufe ein frequenzabhängiges Dämpfungsverhalten aufweist, ist erfindungsgemäß vorgesehen, auch dem Druckstufen-Dämpfungsventil einer Einrichtung zur Änderung einer Vorspannung ist Druckstufen-Dämpfungsventils zuzuordnen. Diese Einrichtung zur Änderung der Vorspannung des Druckstufen-Dämpfungsventils ist erfindungsgemäß analog zu der Einrichtung zur Änderung der Vorspannung des Zugstufen-Dämpfungsventils aufgebaut. Die Einrichtung zur Änderung der Vorspannung des Zugstufen-Dämpfungsventils ist konstruktiv so ausgeführt, dass sie in Axialrichtung des Dämpferrohrs gesehen nur wenig Bauraum in Anspruch nimmt. Daher kann dem Druckstufen-Dämpfungsventils eine entsprechend aufgebaute Einrichtung zur Änderung der Vorspannung zugeordnet werden, ohne zuviel Bauraum in Axialrichtung beanspruchen zu müssen.

Gemäß einer Ausführungsform der Erfindung weist die Ventilanordnung des Schwingungsdämpfers einen zweiten Druckraum auf, der hydraulisch mit dem kolbenstangenfernen Arbeitsraum verbunden ist. Es ist eine Einrichtung zur Änderung einer Vorspannung des Druckstufen-Dämpfungsventils in Abhängigkeit von einer Frequenz der Kolbenstangenbewegungen vorgesehen. Diese Einrichtung ist genauso aufgebaut, wie die vorstehend beschriebene Einrichtung zur Änderung einer Vorspannung des Zugstufen-Dämpfungsventils. Sie weist dementsprechend ein Betätigungselement auf, welches von einem sich in dem zweiten Druckraum infolge einer Druckstufenbewegung der Kolbenstange frequenzabhängig einstellenden Druck beaufschlagbar und derart verstellbar ist, dass die Vorspannung des Druckstufen-Dämpfungsventils vergrößert wird. Wie bereits vorstehend zum Zugstufen-Dämpfungsventils beschrieben weist die Einrichtung zur Änderung einer Vorspannung des Druckstufen-Dämpfungsventils ein Hebelelement auf, wobei durch das Hebeelement eine Verstellbewegung des Betätigungselements in eine die Vorspannung des Druckstufen-Dämpfungsventils erhöhende zusätzliche Vorspannkraft übersetzbar ist.

Der konstruktive Aufbau und die Funktionsweise der Einrichtung zur Änderung der Vorspannung des Druckstufen-Dämpfungsventils entsprechen dem Aufbau und der Funktionsweise der Einrichtung zur Änderung der Vorspannung des Zugstufen-Dämpfungsventils. Dementsprechend sind auch die technischen Vorteile, die durch die Einrichtung zur Änderung der Vorspannung des Druckstufen-Dämpfungsventils erreicht werden, identisch mit den technischen Vorteilen, die vorstehend bereits in Bezug auf die Einrichtung zur Änderung der Vorspannung des Zugstufen-Dämpfungsventils beschrieben worden sind. Zur Vermeidung von Wiederholungen wird daher im allgemeinen Beschreibungsteil auf die Nennung von vorteilhaften Wirkungen, die durch die dem Druckstufen-Dämpfungsventil zugeordnete Einrichtung zur Änderung der Vorspannung erzielt werden, verzichtet. Lediglich der konstruktive Aufbau der dem Druckstufen-Dämpfungsventils zugeordneten Einrichtung zur Änderung der Vorspannung soll nachstehend im allgemeinen Beschreibungsteil beschrieben werden.

Gemäß einer Ausführungsform der Erfindung ist das Hebelelement der Einrichtung zur Änderung einer Vorspannung des Druckstufen-Dämpfungsventils Kreis ringförmig ausgebildet und weist einen Außendurchmesser und einen Innendurchmesser sowie eine Druckausgleichsöffnung auf.

Das Hebelelement und das Betätigungselement der dem Druckstufen-Dämpfungsventil zugeordneten Einrichtung sind in einem hohl zylindrischen Bereich des Ventilkörpers angeordnet, wobei das Betätigungselement infolge einer Erhöhung des Drucks in dem zweiten Druckraum in Richtung Hebelelement verschiebbar ist.

Gemäß einer Ausführungsform der Erfindung weist das Betätigungselement der dem Druckstufen-Dämpfungsventils zugeordneten Einrichtungen zur Änderung der Vorspannung einen kreisscheibenförmigen Grundkörper mit einer Grundfläche auf, wobei die Grundfläche durch den sich in dem zweiten Druckraum infolge einer Druckstufenbewegung der Kolbenstange frequenzabhängig einstellenden Druck beaufschlagbar ist.

Nach einer Ausführungsform der Erfindung weist das Betätigungselement der dem Druckstufen-Dämpfungsventil zugeordneten Einrichtung einen sich von dem Grundkörper aus in Richtung Hebelelement erstreckenden hohlzylindrischen Mantel auf oder das Betätigungselement weist mehrere sich von dem Grundkörper aus in Richtung Hebelelement erstreckende, über den Umfang des Grundkörpers verteilt angeordnete Stegelemente auf, wobei die Stirnfläche des hohlzylindrischen Mantels oder die Stirnflächen der Stegelemente dem Hebelelement zugewandt sind. Vorteilhaft entspricht der Durchmesser des hohlzylindrischen Mantels dem Außendurchmesser des Hebelelements oder der Durchmesser des Umfangskreises, auf dem die Stegelemente verteilt angeordnet sind, entspricht dem Außendurchmesser des Hebelelements.

Gemäß einer Ausführungsform der Erfindung ist bei der dem Druckstufen-Dämpfungsventil zugeordneten Einrichtung zur Änderung der Vorspannung ein Klemmelement vorgesehen, welches in Axialrichtung des Dämpferrohrs verschiebbar in einer Bohrung des Ventilkörpers angeordnet ist, wobei das Hebelelements an seinem Innendurchmesser in Axialrichtung zumindest formschlüssig zwischen dem Klemmelement und dem Ventilkörper gehalten ist.

Gemäß einer Ausführungsform der Erfindung weist das Klemmelement der dem Druckstufen-Dämpfungsventils zugeordneten Einrichtung zur Änderung der Vorspannung einen ersten Klemmkragen auf, wobei das Hebelelement an seinem Innendurchmesser zwischen dem ersten Klemmkragen und dem Ventilkörper in Axialrichtung zumindest formschlüssig gehalten ist.

Nach einer Ausführungsform der Erfindung weist das Druckstufen-Dämpfungsventil ein Ventilscheibenpaket auf, und das Klemmelement der dem Druckstufen-Dämpfungsventil zugeordneten Einrichtung zur Änderung der Vorspannung weist einen zweiten Klemmkragen auf, wobei das Ventilscheibenpaket zwischen dem zweiten Klemmkragen und einem an dem Ventilkörper ausgebildeten Ventilsitz unter Vorspannung gehalten ist.

Im Folgenden wird die Erfindung anhand einer schematischen Zeichnung näher erläutert. Es zeigen
- Fig. 1a: einen Teil eines erfindungsgemäßen Schwingungsdämpfers in einer ersten Bauform im axialen Halbschnitt, dargestellt im Zustand einer Zugstufenbewegung der Kolbenstange;
- Fig. 1b: einen Teil eines erfindungsgemäßen Schwingungsdämpfers nach einer ersten Ausführungsform im axialen Halbschnitt, dargestellt im Zustand einer Druckstufenbewegung der Kolbenstange;
- Fig. 2a: eine Detailansicht der erfindungsgemäßen Einrichtung zur Änderung der Vorspannung des Zugstufen-Dämpfungsventils in einer nicht ausgelenkten Position des Hebelelements;
- Fig. 2b: eine Detailansicht der erfindungsgemäßen Einrichtung zur Änderung der Vorspannung des Zugstufen-Dämpfungsventils in einer ausgelenkten Position des Hebelelements;
- Fig. 3: einen Teil eines erfindungsgemäßen Schwingungsdämpfers in einer zweiten Bauform im axialen Halbschnitt;
- Fig. 4a: eine erste Ausführungsform des Hebelelements;
- Fig. 4b: eine zweite Ausführungsform des Hebelelements.

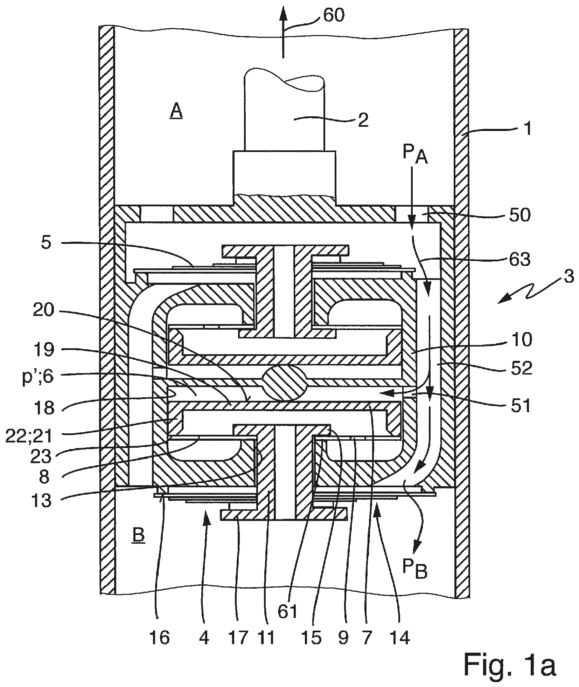

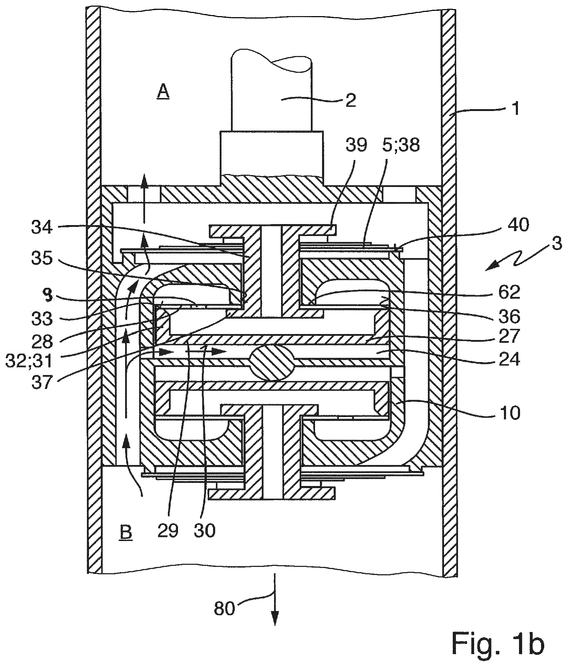

In den Fig. 1a und 1b ist eine erste Ausführungsform der Erfindung dargestellt. Fig. 1a zeigt den Schwingungsdämpfer bei einer Zugstufenbewegung der Kolbenstange (Pfeil 60). Fig. 1b zeigt den Schwingungsdämpfer bei einer Druckstufenbewegung der Kolbenstange (Pfeil 80).

Der erfindungsgemäße Schwingungsdämpfer umfasst ein Dämpferrohr 1, eine Kolbenstange 2, die in einer Zugstufenbewegung aus dem Dämpferrohr 1 heraus und in einer Druckstufenbewegung in das Dämpferrohr 1 hinein oszillierend bewegbar ist. Das Dämpferrohr 1 ist in einen kolbenstangenseitigen Arbeitsraum A und einen kolbenstangenfernen Arbeitsraum B unterteilt. Ferner weist der erfindungsgemäße Schwingungsdämpfer eine mit der Kolbenstange 2 mitbewegbare Ventilanordnung 3 auf. Die Ventilanordnung weist einen Ventilkörper 10 auf. Es sind ein in einer Zugstufenbewegung der Kolbenstange 2 wirksames Zugstufen-Dämpfungsventil 4 und ein in einer Druckstufenbewegung der Kolbenstange wirksames Druckstufen-Dämpfungsventil 5 vorgesehen. Ferner weist die Ventilanordnung 3 einen ersten Druckraum 6 auf, der hydraulisch mit dem kolbenstangenseitigen Arbeitsraum A verbunden ist. Weiterhin weist der erfindungsgemäße Schwingungsdämpfer eine Einrichtung 7, 8 zur Änderung einer Vorspannung des Zugstufen-Dämpfungsventils 4 in Abhängigkeit von einer Frequenz F der Kolbenstangenbewegungen auf. Die Einrichtung 7, 8 weist ein Betätigungselement 7 auf. Das Betätigungselement 7 ist von einem Druck beaufschlagbar, der sich in dem ersten Druckraum 6 infolge einer Zugstufenbewegung der Kolbenstange 2 in Abhängigkeit von der Frequenz F der Kolbenstangenbewegungen einstellt. Das Betätigungselement 7 ist derart verstellbar, dass die Vorspannung des Zugstufen-Dämpfungsventils 4 durch die Verstellbewegung des Betätigungselements 7 vergrößert wird.

Die Einrichtung zur Änderung einer Vorspannung des Zugstufen-Dämpfungsventils 4 weist ein Hebelelement 8 auf. Im dargestellten Ausführungsbeispiel ist das Hebelelement 8 als kreisringförmige Scheibe ausgebildet. Das Hebelelement 8 weist eine Druckausgleichsöffnung 9 auf. Durch diese Druckausgleichsöffnung 9 wird erreicht, dass auf beiden Seiten des Hebelelements 8, d.h. in dem über dem Hebelelement 8 angeordneten Raum einerseits und in dem unter dem Hebelelement 8 angeordneten Raum andererseits, derselbe Druck vorliegt.

Das Hebelelement 8 und das Betätigungselement 7 sind in einem hohlzylindrischen Bereich 18 des Ventilkörpers 10 angeordnet. Das Betätigungselement 7 ist infolge einer Erhöhung des Drucks in dem ersten Druckraum 6 in Richtung Hebelelement 8 verschiebbar. Diese Verstellbewegung des Betätigungselements 7 wird durch die Wand des hohlzylindrischen Bereichs 18 geführt, sodass das Betätigungselement 7 exakte und kontrollierte Verstellbewegungen ausführt. Im dargestellten Ausführungsbeispiel weist das Betätigungselement 7 einen kreisscheibenförmigen Grundkörper 19 mit einer Grundfläche 20 auf. Die Grundfläche 20 ist durch den Druck, der sich in dem ersten Druckraum 6 ausbildet, beaufschlagbar. Da sich der Druck in dem ersten Druckraum 6 in Abhängigkeit von der Frequenz F der oszillierenden Kolbenstangenbewegung einstellt vollführt das Betätigungselement 7 somit von der Frequenz F der Kolbenstangenbewegung abhängige Verstellbewegungen.

Das Betätigungselement 7 weist im dargestellten Ausführungsbeispiel einen sich von dem Grundkörper 19 aus in Richtung Hebelelement 8 erstreckenden hohlzylindrischen Mantel 21 auf. Die Stirnfläche 23 des hohlzylindrischen Mantels 21 ist dem Hebelelement 8 zugewandt. Alternativ zu dem umlaufenden hohlzylindrischen Mantel 21 kann das Betätigungselement 7 mehrere, sich von dem Grundkörper 19 aus in Richtung Hebelelement 8 erstreckende, über den Umfang des Grundkörpers 19 verteilt angeordnete Stegelemente 22 aufweisen. Zwischen den einzelnen Stegelementen 22 sind dann Lücken vorhanden, sodass ein derart ausgebildetes Betätigungselement 7 ein geringeres Gewicht aufweist als im Falle eines umlaufenden hohlzylindrischen Mantels 21. Die Stirnflächen 23 der Stegelemente 22 sind dem Hebeelement 8 zugewandt.

Im dargestellten Ausführungsbeispiel entspricht der Durchmesser des hohlzylindrischen Mantels 21 dem Außendurchmesser D des Hebelelements 8. Sind anstelle des hohlzylindrischen Mantels 21 über den Umfang des Grundkörpers 19 verteilt angeordnete Stegelemente 22 vorgesehen, so entspricht der Durchmesser des Umfangskreises, auf dem die Stegelemente 22 verteilt angeordnet sind, dem Außendurchmesser D des Hebelelements 8.

Die Ventilanordnung 3 umfasst ferner ein Klemmelement 11, welches in einer Bohrung 13 des Ventilkörpers 10 angeordnet ist. Das Klemmelement 11 ist in dieser Bohrung 13 in Axialrichtung des Dämpferrohrs verschiebbar. Das Hebelelement 8 ist an seinem Innendurchmesser d in Axialrichtung zumindest formschlüssig zwischen dem Klemmelement 11 und dem Ventilkörper 10 gehalten. Im dargestellten Ausführungsbeispiel ist das Klemmelement 11 als hohlzylindrischer Niet ausgebildet.

Das Klemmelement 11 weist einen ersten Klemmkragen 15 auf. Dieser erste Klemmkragen 15 dient dazu, das Hebelelement 8 an seinem Innendurchmesser d in Axialrichtung gesehen zumindest Form schlüssig zu halten. Hierzu weist im dargestellten Ausführungsbeispiel der Ventilkörper 10 eine dem ersten Klemmkragen 15 zugewandte kreisringförmige Anlagefläche 61 auf. Das Hebeelement 8 ist im Bereich seines Innendurchmesser d zwischen dem ersten Klemmkragen 15 und der Anlagefläche 61 in Axialrichtung formschlüssig gehalten. Auf diese Weise ist sichergestellt, dass eine Verstellkraft, die auf das Hebelelement 8 im Bereich des Außendurchmesser D einwirkt, in eine Hebelkraft übersetzt wird, die auf das Klemmelement 11 einwirkt und dieses relativ zu dem Ventilkörper 10 in Axialrichtung in Richtung Kolbenstange 2 verschiebt. Die Verschiebebewegung des Klemmelements 11 wird dabei durch die Innenwand der Bohrung 13 geführt.

Im dargestellten Ausführungsbeispiel weist das Zugstufen-Dämpfungsventil 4 ein Ventilscheibenpaket 14 auf und das Klemmelement 11 weist einen zweiten Klemmkragen 17 auf. Das Ventilscheibenpaket 14 ist zwischen einem zweiten Klemmkragen 17 und einem an dem Ventilkörper 10 ausgebildeten Ventilsitz 16 unter Vorspannung gehalten. Wenn das Klemmelement 11 durch eine Hebelkraft, die am Innendurchmesser d von dem Hebelelement 8 auf den ersten Klemmkragen 15 ist Klemmelement 11 übertragen wird, in Richtung Kolbenstange 2 in Axialrichtung verschoben wird, so wird das Ventilscheibenpaket 14 stärker zwischen dem zweiten Klemmkragen 17 und dem Ventilsitz 16 vorgespannt. Da - wie vorstehend bereits beschrieben - die auf das Hebeelement 8 einwirkende Verstellkraft frequenzabhängig ist, ist auch die von dem Hebelelement 8 auf das Klemmelement 11 einwirkende Hebelkraft frequenzabhängig, sodass eine frequenzabhängige Änderung der Vorspannung des Ventilscheibenpakets 14 erreicht wird.

Im dargestellten Ausführungsbeispiel weist der Schwingungsdämpfer auch in der Druckstufe der Kolbenstangenbewegungen, d.h. bei einer Eintauchbewegung der Kolbenstange 2 in das Dämpferrohr 1, ein frequenzabhängiges Dämpfungsverhalten auf. Dies wird dadurch erreicht, dass die vorstehend in Bezug auf das Zugstufen-Dämpfungsventil 4 beschriebene Ventilanordnung 3 mit der Einrichtung zur Änderung der Vorspannung des Zugstufen-Dämpfungsventils 4 in analoger Weise auch für das Druckstufen-Dämpfungsventil 5 vorgesehen ist. Die vorstehend in Bezug auf das Zugstufen-Dämpfungsventil 4 beschriebenen technischen Vorteile und Wirkungsweisen gelten daher entsprechend in Bezug auf das Druckstufen-Dämpfungsventil 5.

Dementsprechend weist die Ventilanordnung 3 einen zweiten Druckraum 24 auf, der hydraulisch mit dem kolbenstangenfernen Arbeitsraum B verbunden ist. Es ist eine Einrichtung 27, 28 zur Änderung einer Vorspannung des Druckstufen-Dämpfungsventils 5 in Abhängigkeit von einer Frequenz F der Kolbenstangenbewegungen vorgesehen. Die Einrichtung 27, 28 weist ein Betätigungselement 27 auf, welches von einem sich in dem zweiten Druckraum 24 infolge einer Druckstufenbewegung der Kolbenstange 2 frequenzabhängig einstellenden Druck beaufschlagbar und derart verstellbar ist, dass die Vorspannung des Druckstufen-Dämpfungsventils 5 vergrößert wird.

Die Einrichtung zur Änderung der Vorspannung des Druckstufen-Dämpfungsventils 5 weist ein Hebelelement 28 auf. Durch das Hebelelement 28 ist eine Verstellbewegung des Betätigungselements 27 in eine die Vorspannung des Druckstufen-Dämpfungsventils 5 erhöhende zusätzliche Vorspannkraft übersetzbar.

Das Hebelelement 28 ist kreisringförmig ausgebildet. Es weist einen Außendurchmesser D und einen Innendurchmesser d sowie eine Druckausgleichsöffnung 9 auf. Das Hebelelement 28 und das Betätigungselement 27 sind in einem hohlzylindrischen Bereich 36 des Ventilkörpers 10 angeordnet. Das Betätigungselement 27 ist infolge einer Erhöhung des Drucks in dem zweiten Druckraum 24 in Richtung Hebelelement 28 verschiebbar.

Das Betätigungselement 27 weist einen kreisscheibenförmigen Grundkörper 29 mit einer Grundfläche 30 auf. Die Grundfläche 30 ist durch den sich in dem zweiten Druckraum 24 infolge einer Druckstufenbewegung der Kolbenstange 2 frequenzabhängig einstellenden Druck beaufschlagbar.

Das Betätigungselement 27 weist im dargestellten Ausführungsbeispiel einen sich von dem Grundkörper 29 aus in Richtung Hebelelement 28 erstreckenden hohlzylindrischen Mantel 31 auf, wobei die Stirnfläche 33 des hohlzylindrischen Mantels 31 dem Hebelelement 28 zugewandt ist. Alternativ zu dem hohlzylindrischen Mantel 31 kann das Betätigungselement 27 mehrere sich von dem Grundkörper 29 aus in Richtung Hebelelement 28 erstreckende, über den Umfang des Grundkörpers 29 verteilt angeordnete Stegelemente 32 aufweisen, wobei die Stirnflächen 33 der Stegelemente 32 dem Hebelelement 28 zugewandt sind.
Der Durchmesser des hohlzylindrischen Mantels 31 entspricht im dargestellten Ausführungsbeispiel dem Außendurchmesser D des Hebelelements 28. Sind anstelle des hohlzylindrischen Mantels 31 über den Umfang des Grundkörpers 29 verteilt angeordnete Stegelemente 32 vorgesehen, so entspricht der Durchmesser des Umfangskreises, auf dem die Stegelemente 32 verteilt angeordnet sind, dem Außendurchmesser D des Hebelelements 28.

Es ist ein Klemmelement 34 vorgesehen, welches in Axialrichtung des Dämpferrohrs 1 verschiebbar in einer Bohrung 35 des Ventilkörpers 10 angeordnet ist. Das Hebelelement 28 ist an seinem Innendurchmesser d in Axialrichtung zumindest formschlüssig zwischen dem Klemmelement 34 und dem Ventilkörper 10 gehalten.

Das Klemmelement 34 weist einen ersten Klemmkragen 37 auf, wobei das Hebelelement 28 an seinem Innendurchmesser d zwischen dem ersten Klemmkragen 37 und dem Ventilkörper 10 in Axialrichtung zumindest formschlüssig gehalten ist. Hierzu ist an dem Ventilkörper 10 eine kreisringförmige Anlagefläche 62 vorgesehen. Das Hebelelement 28 ist an seinem Innendurchmesser d zwischen dem ersten Klemmkragen 37 und der kreisringförmigen Anlagefläche 62 in Axialrichtung formschlüssig gehalten.

Das Druckstufen-Dämpfungsventil 5 weist ein Ventilscheibenpaket 38 auf und das Klemmelement 34 weist einen zweiten Klemmkragen 39 auf, wobei das Ventilscheibenpaket 38 zwischen dem zweiten Klemmkragen 39 und einem an dem Ventilkörper 10 ausgebildeten Ventilsitz 40 unter Vorspannung gehalten ist.

### Beschreibung der Funktionsweise:

Im Folgenden soll am Beispiel des Zugstufen-Dämpfungsventils 4 die Funktionsweise der erfindungsgemäßen Ventilanordnung 3 und insbesondere der darin enthaltenen Einrichtung zur Änderung der Vorspannung des Zugstufen-Dämpfungsventils 4 beschrieben werden. Die Zugstufenbewegung der Kolbenstange ist in Fig. 1 durch den Pfeil 60 angegeben. Die durch eine Zugstufenbewegung der Kolbenstange 2 verursachte Strömung von Dämpfungsfluid durch den Kanal 52 der Ventilanordnung 3 ist durch Pfeile 63 dargestellt.
Da die Ventileinrichtung 3 in Bezug auf das Druckstufen-Dämpfungsventil 5 genauso ausgebildet ist wir in Bezug auf das Zugstufen-Dämpfungsventil 4, gilt die funktionale Beschreibung entsprechend für die Funktionsweise der Ventilanordnung 3 bei einer Druckstufenbewegung der Kolbenstange.

Die Erhöhung des Drucks in dem ersten Druckraum 6 infolge einer Zugstufenbewegung der Kolbenstange 2 ist abhängig von der Frequenz F der Kolbenstangenbewegung. Daher sind auch die Verstellbewegung des Betätigungselements 7 und die über das Hebelelement 8 generierte zusätzliche Vorspannkraft, die auf das Zugstufen-Dämpfungsventil 4 einwirkt, abhängig von der Frequenz der oszillierenden Bewegung der Kolbenstange 2. Aus diesem Grunde weist das Zugstufen-Dämpfungsventil 4 ein von der Frequenz der Kolbenstangenbewegung abhängiges Öffnungsverhalten auf. Dementsprechend weist der erfindungsgemäße Schwingungsdämpfer in der Zugstufe ein frequenzabhängiges Dämpfungsverhalten auf. Diese Frequenzabhängigkeit soll nachstehend genauer beschrieben werden.

Wenn sich die Kolbenstange 2 gemäß Pfeil 60 in Fig. 1a in Zugstufenrichtung bewegt, so strömt Dämpfungsfluid aus dem kolbenstangenseitigen Arbeitsraum A durch den Strömungsquerschnitt 50 in den Kanal 52. Ein Teil des Dämpfungsfluids strömt durch den Kanal 52 auf das in dem dargestellten Ausführungsbeispiel als Federscheibenventil ausgebildete Zugstufen-Dämpfungsventil 4 zu. Ein anderer Teil des Dämpfungsfluids strömt durch den Strömungsquerschnitt 51 in den ersten Druckraum 6.

Durch den Anteil des Dämpfungsfluids, der auf das Zugstufen-Dämpfungsventil 4 zuströmt, erhöht sich der in Öffnungsrichtung des Zugstufen-Dämpfungsventils 4 wirkende Druck pA auf der der Kolbenstange 2 zugewandten Seite des Zugstufen-Dämpfungsventils 4. Auf der von der Kolbenstange 2 abgewandten Seite des Zugstufen-Dämpfungsventils 4 liegt der in dem kolbenstangenfernen Arbeitsraum B vorliegende Druck pB an. Wird die für ein Öffnen des Zugstufen-Dämpfungsventils 4 erforderliche Druckdifferenz (pA - pB) erreicht, so öffnet das Zugstufen-Dämpfungsventil 4 und das Dämpfungsfluid strömt in den kolbenstangenfernen Arbeitsraum B. Dabei wird eine Dämpfungskraft erzeugt. Die Höhe der für ein Öffnen des Zugstufen-Dämpfungsventils 4 erforderlichen Druckdifferenz (pA - pB), der so genannte
Öffnungsdruck, wird durch die Vorspannung des Zugstufen-Dämpfungsventils 4 beeinflusst.

Durch den anderen Teil des bei einer Zugstufenbewegung der Kolbenstange 2 durch den Kanal 52 strömenden Dämpfungsfluids, der durch den Strömungsquerschnitt 51 in den ersten Druckraum 6 strömt, steigt der Druck p' in dem ersten Druckraum 6 an. Die Druckerhöhung in dem ersten Druckraum 6 kann durch die Dimensionierung des Strömungsquerschnitts 51 respektive des bei der Durchströmung des Strömungsquerschnitts 51 auftretenden Druckverlusts gesteuert bzw. eingestellt werden. Der Druck p' wirkt auf die der Kolbenstange 2 zugewandte Grundfläche 20 des kreisscheibenförmigen Grundkörpers 19 des Betätigungselements 7 ein. Dadurch wird eine Verstellbewegung des Betätigungselements 7 in Richtung des Hebelelements 8 bewirkt und das Betätigungselement 7 übt eine Verstellkraft auf das Hebelelement 8 aus. Im dargestellten Ausführungsbeispiel wird diese Verstellkraft im Bereich des Außendurchmesser D des Hebelelements 8 in dieses eingeleitet.
Die Ausgangssituation, in der noch keine Verstellkraft in das Hebelelement 8 eingeleitet wird, ist in Fig. 2a dargestellt. Das Hebelelement 8 ist an seinem Innendurchmesser d zwischen dem ersten Klemmkragen 15 und der Anlagefläche 61 in Axialrichtung formschlüssig gehalten. Durch die Druckausgleichsöffnung 9 wird bewirkt, dass auf beiden Seiten des Hebelelements 8 derselbe Druck vorliegt. Der Druck p', der auf die Grundfläche 20 des Betätigungselements 7 einwirkt, steigt bei einer Zugstufenbewegung der Kolbenstange an. Wie voranstehend beschrieben ist die Höhe dieses Druckanstiegs abhängig von der Frequenz F der oszillierenden Kolbenstangenbewegung. Wenn die Kolbenstange 2 mit hoher Frequenz F oszilliert, so steht nur wenig Zeit dafür zur Verfügung, dass Dämpfungsfluid in den ersten Druckraum 6 einfließen kann. Dementsprechend steigt der Druck in dem ersten Druckraum 6 nur relativ gering an. Oszilliert die Kolbenstange 2 dagegen mit geringer Frequenz F, so steht in einer Zugstufenbewegung der Kolbenstange 2 relativ viel Zeit dafür zur Verfügung, das Dämpfungsfluid in den ersten Druckraum 6 einfließen kann. Dementsprechend kann der Druck in dem ersten Druckraum 6 auf relativ hohe Werte ansteigen. Geringe Drücke im ersten Druckraum 6 bewirken geringe Verstellbewegungen des Betätigungselements 7 und damit geringe auf das Hebelelement 8 einwirkende Verstellkräfte. Hohe Drücke im ersten Druckraum 6 bewirken große Verstellbewegungen und damit große auf das Hebelelement 8 einwirkende Verstellkräfte.

Fig. 2b zeigt die Situation, nachdem das Betätigungselement 7 eine Verstellbewegung ausgeführt hat. Das Hebelelement 8 überträgt eine gemäß dem Hebelgesetz übersetzte und damit verstärkte Kraft auf das Klemmelement 11. Die auf das Klemmelement 11 übertragene Kraft wirkt in Richtung Kolbenstange 2, d.h. in Fig. 2b nach oben. Das Klemmelement 11 wird dadurch entlang der Bohrung 13 relativ zum Ventilkörper 10 verschoben. Der zweite Klemmkragen 17, auf dem sich die Ventilscheiben des Ventilscheibenpakets 14 abstützen, wird in Axialrichtung in Richtung Kolbenstange 2 (d.h. in Fig. 2b nach oben) verlagert. Dabei nimmt der zweite Klemmkragen 17 das Ventilscheibenpaket 14 mit. Gleichzeitig ist das Ventilscheibenpaket 14 im Bereich seines Außendurchmessers an dem Ventilsitz 16 abgestützt, der an dem Ventilkörper 10 ausgebildet ist. Auf diese Weise erhöht sich die Vorspannung des Ventilscheibenpakets 14 des Zugstufen-Dämpfungsventils 4. Dies hat zur Folge, dass sich das Zugstufen-Dämpfungsventil 4 erst bei höheren Öffnungsdrücken öffnet und höhere Dämpfungskräfte erzeugt.

Fig. 3 zeigt eine zweite Ausführungsform der Erfindung. Die Funktionsweise des Schwingungsdämpfers und der Ventilanordnung 3 ist identisch mit der Funktionsweise der ersten Ausführungsform der Erfindung gemäß Fig. 1. Im Unterschied zu der ersten Ausführungsform dient das Gehäuse der Ventilanordnung 3 nicht dazu, den Innenraum des Dämpferrohrs 1 in einen kolbenstangenseitigen Arbeitsraum A und einen kolbenstangenfernen Arbeitsraum B zu unterteilen. Stattdessen ist der Innenraum des Dämpferrohrs 1 durch einen Arbeitskolben 70 in einen kolbenstangenseitigen Arbeitsraum A und einen kolbenstangenfernen Arbeitsraum B unterteilt. Zusätzlich zu dem Arbeitskolben 70 ist in dem kolbenstangenseitigen Arbeitsraum A die erfindungsgemäße, mit der Kolbenstange 2 mitbewegbare Ventilanordnung 3 angeordnet. Die Ventilanordnung 3 ist hydraulisch parallel zu dem Arbeitskolben 70 angeordnet. In dem dargestellten Ausführungsbeispiel wird dies dadurch erreicht, dass in der Kolbenstange 2 ein Strömungskanal 71 vorgesehen ist, der einen hydraulischen Bypass zu dem Arbeitskolben 70 bildet. Bei dieser Ausführungsform bietet sich der Vorteil, dass der Arbeitskolben 70 eine erste Dämpfungskennung aufweisen kann, während die Ventilanordnung 3 eine zweite Dämpfungskennung aufweisen kann. Beispielsweise kann der Arbeitskolben 70 so ausgelegt sein, dass er eine harte Dämpfungscharakteristik aufweist, während die Ventilanordnung 3 eine im Vergleich dazu weichere Dämpfungscharakteristik aufweist. Dadurch bietet die zweite Ausführungsform der Erfindung dem Konstrukteur wesentlich mehr Möglichkeiten, das Dämpfungsverhalten des Schwingungsdämpfers an geforderte Dämpfungskennlinienverläufe anzupassen, als die erste Ausführungsform der Erfindung.

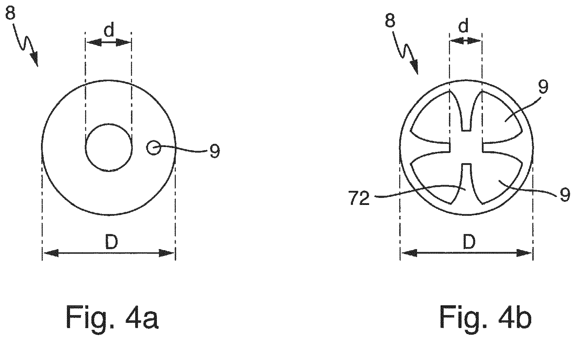

In den Fig. 4a und 4b sind beispielhaft 2 mögliche Ausführungsformen des Hebelelements 8 dargestellt. Gemäß Fig. 4a ist das Hebeelement 8 als Kreis ringförmige Scheibe ausgebildet. Das Hebelelement 8 weist einen Außendurchmesser D und einen Innendurchmesser d auf. Ferner ist eine Druckausgleichsöffnung 9 in Form einer Bohrung vorgesehen, durch die im Einbauzustand sichergestellt wird, dass auf beiden Seiten des Hebelelements 8 derselbe Druck vorliegt. Gemäß Fig. 4b weist das Hebelelement 8 einen umlaufenden Außenring auf, von dem ausgehend sich radial nach innen Stege 72 erstrecken. Diese Stege 72 können auch als Hebelzungen bezeichnet werden. Das Hebelelement 8 gemäß Figur 4b weist mehrere Druckausgleichsöffnungen 9 auf. Grundsätzlich sind noch viele weitere Ausgestaltungen des Hebeelements 8 denkbar. Zu beachten ist, dass das Hebelelement 8 die Hebelkräfte auf das Klemmelement 11 zuverlässig und dauerhaft überträgt.

### Bezugszeichenliste

- 1: Dämpferrohr
- 2: Kolbenstange
- 3: Ventilanordnung
- 4: Zugstufen-Dämpfungsventil
- 5: Druckstufen-Dämpfungsventil
- 6: Druckraum
- 7: Betätigungselement
- 8: Hebelelement
- 9: Druckausgleichsöffnung
- 10: Ventilkörper
- 11: Klemmelement
- 13: Bohrung
- 14: Ventilscheibenpaket
- 15: erster Klemmkragen
- 16: Ventilsitz
- 17: zweiter Klemmkragen
- 18: hohlzylindrischer Bereich
- 19: Grundkörper
- 20: Grundfläche
- 21: hohlzylindrischer Mantel
- 22: Stegelemente
- 23: Stirnfläche/Stirnflächen
- 24: zweiter Druckraum
- 27: Betätigungselement
- 28: Hebelelement
- 29: Grundkörper
- 30: Grundfläche
- 31: hohlzylindrischer Mantel
- 32: Stegelemente
- 33: Stirnfläche/Stirnflächen
- 34: Klemmelement
- 35: Bohrung
- 36: hohlzylindrischer Bereich
- 37: erster Klemmkragen
- 38: Ventilscheibenpaket
- 39: zweiter Klemmkragen
- 40: Ventilsitz
- 50: Strömungsquerschnitt
- 51: Strömungsquerschnitt
- 52: Kanal
- 60: Pfeil/Zugstufenrichtung
- 61: Anlagefläche
- 62: Anlagefläche
- 63: Pfeile
- 70: Arbeitskolben
- 71: Strömungskanal
- 72: Stege
- 80: Pfeil/Druckstufenrichtung
- A: kolbenstangenseitiger Arbeitsraum
- B: Kolbenstangenferner Arbeitsraum
- F: Frequenz der Kolbenstangenbewegung

## Patentansprüche

1. Schwingungsdämpfer umfassend
1.1. ein Dämpferrohr (1),
1.2. eine Kolbenstange (2), die in einer Zugstufenbewegung aus dem Dämpferrohr (1) heraus und in einer Druckstufenbewegung in das Dämpferrohr (1) hinein oszillierend bewegbar ist, wobei das Dämpferrohr (1) in einen kolbenstangenseitigen Arbeitsraum (A) und einen kolbenstangenfernen Arbeitsraum (B) unterteilt ist,
1.3. eine mit der Kolbenstange (2) mitbewegbare Ventilanordnung (3), aufweisend
1.3.1. einen Ventilkörper (10)
1.3.2. ein in einer Zugstufenbewegung der Kolbenstange (2) wirksames Zugstufen-Dämpfungsventil (4),
1.3.3. ein in einer Druckstufenbewegung der Kolbenstange (2) wirksames Druckstufen-Dämpfungsventil (5),
1.3.4. einen ersten Druckraum (6), der hydraulisch mit dem kolbenstangen-seitigen Arbeitsraum (A) verbunden ist,
1.4. eine Einrichtung (7, 8) zur Änderung einer Vorspannung des Zugstufen-Dämpfungsventils (4) in Abhängigkeit von einer Frequenz (F) der Kolbenstangenbewegung, wobei die Einrichtung (7, 8) ein Betätigungselement (7) aufweist, welches von einem sich in dem ersten Druckraum (6) infolge einer Zugstufenbewegung der Kolbenstange (2) frequenzabhängig einstellenden Druck beaufschlagbar und derart verstellbar ist, dass die Vorspannung des Zugstufen-Dämpfungsventils (4) vergrößert wird,
**dadurch gekennzeichnet, dass**
1.5. die Einrichtung zur Änderung einer Vorspannung des Zugstufen-Dämpfungsventils (4) ein Hebelelement (8) aufweist, wobei
1.6. durch das Hebelelement (8) eine Verstellbewegung des Betätigungselements (7) in eine die Vorspannung des Zugstufen-Dämpfungsventils (4) erhöhende zusätzliche Vorspannkraft übersetzbar ist.

2. Schwingungsdämpfer nach Anspruch 1, **dadurch gekennzeichnet, dass** das Hebelelement (8) kreisringförmig ausgebildet ist und einen Außendurchmesser (D) und einen Innendurchmesser (d) sowie eine Druckausgleichsöffnung (9) aufweist.

3. Schwingungsdämpfer nach einem der voranstehenden Ansprüche, **dadurch gekennzeichnet, dass** das Hebelelement (8) und das Betätigungselement (7) in einem hohlzylindrischen Bereich (18) des Ventilkörpers (10) angeordnet sind, wobei das Betätigungselement (7) infolge einer Erhöhung des Drucks in dem ersten Druckraum (6) in Richtung Hebelelement (8) verschiebbar ist.

4. Schwingungsdämpfer nach einem der voranstehenden Ansprüche, **dadurch gekennzeichnet, dass** das Betätigungselement (7) einen kreisscheibenförmigen Grundkörper (19) mit einer Grundfläche (20) aufweist, wobei die Grundfläche (20) durch den sich in dem ersten Druckraum (6) infolge einer Zugstufenbewegung der Kolbenstange (2) frequenzabhängig einstellenden Druck beaufschlagbar ist.

5. Schwingungsdämpfer nach Anspruch 4, **dadurch gekennzeichnet, dass** das Betätigungselement (7) einen sich von dem Grundkörper (19) aus in Richtung Hebelelement (8) erstreckenden hohlzylindrischen Mantel (21) aufweist oder dass das Betätigungselement (7) mehrere sich von dem Grundkörper (19) aus in Richtung Hebelelement (8) erstreckende, über den Umfang des Grundkörpers (19) verteilt angeordnete Stegelemente (22) aufweist, wobei eine Stirnfläche (23) des hohlzylindrischen Mantels (21) oder Stirnflächen (23) der Stegelemente (22) dem Hebelelement (8) zugewandt sind.

6. Schwingungsdämpfer nach Anspruch 5, **dadurch gekennzeichnet, dass** der Durchmesser des hohlzylindrischen Mantels (21) dem Außendurchmesser (D) des Hebelelements (8) entspricht oder der Durchmesser des Umfangskreises, auf dem die Stegelemente (22) verteilt angeordnet sind, dem Außendurchmesser (D) des Hebelelements (8) entspricht.

7. Schwingungsdämpfer nach einem der voranstehenden Ansprüche, **dadurch gekennzeichnet, dass** ein Klemmelement (11) vorgesehen ist, welches in Axialrichtung des Dämpferrohrs (1) verschiebbar in einer Bohrung (13) des Ventilkörpers (10) angeordnet ist, wobei das Hebelelement (8) an seinem Innendurchmesser (d) in Axialrichtung zumindest formschlüssig zwischen dem Klemmelement (11) und dem Ventilkörper (10) gehalten ist.

8. Schwingungsdämpfer nach Anspruch 7, **dadurch gekennzeichnet, dass** das Klemmelement (11) einen ersten Klemmkragen (15) aufweist, wobei das Hebelelement (8) an seinem Innendurchmesser (d) zwischen dem ersten Klemmkragen (15) und dem Ventilkörper (10) in Axialrichtung zumindest formschlüssig gehaltenen ist.

9. Schwingungsdämpfer nach Anspruch 7 oder 8, **dadurch gekennzeichnet, dass** das Zugstufen-Dämpfungsventil (4) ein Ventilscheibenpaket (14) aufweist, und dass das Klemmelement (11) einen zweiten Klemmkragen (17) aufweist, wobei das Ventilscheibenpaket (14) zwischen dem zweiten Klemmkragen (17) und einem an dem Ventilkörper (10) ausgebildeten Ventilsitz (16) unter Vorspannung gehaltenen ist.

10. Schwingungsdämpfer nach einem der voranstehenden Ansprüche, **dadurch gekennzeichnet, dass** die Ventilanordnung (3) einen zweiten Druckraum (24) aufweist, der hydraulisch mit dem kolbenstangenfernen Arbeitsraum (B) verbunden ist, wobei eine Einrichtung (27, 28) zur Änderung einer Vorspannung des Druckstufen-Dämpfungsventils (5) in Abhängigkeit von einer Frequenz (F) der Kolbenstangenbewegung vorgesehen ist, wobei die Einrichtung (27, 28) ein Betätigungselement (27) aufweist, welches von einem sich in dem zweiten Druckraum (24) infolge einer Druckstufenbewegung der Kolbenstange (2) frequenzabhängig einstellenden Druck beaufschlagbar und derart verstellbar ist, dass die Vorspannung des Druckstufen-Dämpfungsventils (5) vergrößert wird.

11. Schwingungsdämpfer nach Anspruch 10, **dadurch gekennzeichnet, dass** die Einrichtung zur Änderung einer Vorspannung des Druckstufen-Dämpfungsventils (5) ein Hebelelement (28) aufweist, wobei durch das Hebelelement (28) eine Verstellbewegung des Betätigungselements (27) in eine die Vorspannung des Druckstufen-Dämpfungsventils (5) erhöhende zusätzliche Vorspannkraft übersetzbar ist.

12. Schwingungsdämpfer nach Anspruch 11, **dadurch gekennzeichnet, dass** das Hebelelement (28) kreisringförmig ausgebildet ist und einen Außendurchmesser (D) und einen Innendurchmesser (d) sowie eine Druckausgleichsöffnung (29) aufweist.

13. Schwingungsdämpfer nach Anspruch 11 oder 12, **dadurch gekennzeichnet, dass** das Hebelelement (28) und das Betätigungselement (27) in einem hohlzylindrischen Bereich (36) des Ventilkörpers (10) angeordnet sind, wobei das Betätigungselement (27) infolge einer Erhöhung des Drucks in dem zweiten Druckraum (24) in Richtung Hebelelement (28) verschiebbar ist.

14. Schwingungsdämpfer nach einem der Ansprüche 10 bis 13, **dadurch gekennzeichnet, dass** das Betätigungselement (27) einen kreisscheibenförmigen Grundkörper (29) mit einer Grundfläche (30) aufweist, wobei die Grundfläche (30) durch den sich in dem zweiten Druckraum (24) infolge einer Druckstufenbewegung der Kolbenstange (2) frequenzabhängig einstellenden Druck beaufschlagbar ist.

15. Schwingungsdämpfer nach Anspruch 14, **dadurch gekennzeichnet, dass** das Betätigungselement (27) einen sich von dem Grundkörper (29) aus in Richtung Hebelelement (28) erstreckenden hohlzylindrischen Mantel (31) aufweist oder dass das Betätigungselement (27) mehrere sich von dem Grundkörper (29) aus in Richtung Hebelelement (28) erstreckende, über den Umfang des Grundkörpers (29) verteilt angeordnete Stegelemente (32) aufweist, wobei eine Stirnfläche (33) des hohlzylindrischen Mantels (31) oder Stirnflächen (33) der Stegelemente (32) dem Hebelelement (28) zugewandt sind.

## Claims

1. Vibration damper comprising
1.1 a damper tube (1),
1.2 a piston rod (2) which is able to be moved in an oscillating manner with a rebound stage movement out of the damper tube (1) and with a compression stage movement into the damper tube (1), wherein the damper tube (1) is subdivided into a piston rod-side working space (A) and a working space (B) remote from the piston rod,
1.3 a valve arrangement (3) which is able to be moved along with piston rod (2), comprising
1.3.1 a valve body (10),
1.3.2 a rebound stage damping valve (4), which is active during a rebound stage movement of the piston rod (2),
1.3.3 a compression stage damping valve (5), which is active during a compression stage movement of the piston rod (2),
1.3.4 a first pressure space (6), which is hydraulically connected to the piston rod-side working space (A),
1.4 a device (7, 8) for changing a preload of the rebound stage damping valve (4) in a manner dependent on a frequency (F) of the piston rod movement, wherein the device (7, 8) comprises an actuation element (7) which is able to be subjected to a pressure which, as a result of a rebound stage movement of the piston rod (2), is established in a frequency-dependent manner in the first pressure space (6), said actuation element being able to be adjusted such that the preload of the rebound stage damping valve (4) is increased,
**characterized in that**
1.5 the device for changing a preload of the rebound stage damping valve (4) comprises a lever element (8), wherein,
1.6 by way of the lever element (8), an adjustment movement of the actuation element (7) is able to be converted into an additional preload force which increases the preload of the rebound stage damping valve (4).

2. Vibration damper according to Claim 1, **characterized in that** the lever element (8) is of circular ring-shaped form and comprises an outer diameter (D) and an inner diameter (d) and also a pressure compensation opening (9).

3. Vibration damper according to either of the preceding claims, **characterized in that** the lever element (8) and the actuation element (7) are arranged in a hollow-cylindrical region (18) of the valve body (10), wherein, as a result of an increase in the pressure in the first pressure space (6), the actuation element (7) is able to be displaced in the direction of the lever element (8).

4. Vibration damper according to one of the preceding claims, **characterized in that** the actuation element (7) comprises a circular disc-shaped main body (19) with a base surface (20), wherein the base surface (20) is able to be subjected to the pressure which, as a result of a rebound stage movement of the piston rod (2), is established in a frequency-dependent manner in the first pressure space (6).

5. Vibration damper according to Claim 4, **characterized in that** the actuation element (7) comprises a hollow-cylindrical jacket (21) which extends from the main body (19) in the direction of the lever element (8), or **in that** the actuation element (7) comprises multiple web elements (22) which extend from the main body (19) in the direction of the lever element (8) and which are arranged distributed over the circumference of the main body (19), wherein an end surface (23) of the hollow-cylindrical jacket (21) or end surfaces (23) of the web elements (22) face the lever element (8).

6. Vibration damper according to Claim 5, **characterized in that** the diameter of the hollow-cylindrical jacket (21) corresponds to the outer diameter (D) of the lever element (8), or the diameter of the circumferential circle on which the web elements (22) are arranged in a distributed manner corresponds to the outer diameter (D) of the lever element (8).

7. Vibration damper according to one of the preceding claims, **characterized in that** provision is made of a clamping element (11) which is arranged in a bore (13) of the valve body (10) so as to be able to be displaced in an axial direction of the damper tube (1), wherein the lever element (8) is, at its inner diameter (d), held at least in a form-fitting manner between the clamping element (11) and the valve body (10) in an axial direction.

8. Vibration damper according to Claim 7, **characterized in that** the clamping element (11) comprises a first clamping collar (15), wherein the lever element (8) is, at its inner diameter (d), held at least in a form-fitting manner between the first clamping collar (15) and the valve body (10) in an axial direction.

9. Vibration damper according to Claim 7 or 8, **characterized in that** the rebound stage damping valve (4) comprises a valve disc pack (14), and **in that** the clamping element (11) comprises a second clamping collar (17), wherein the valve disc pack (14) is held under preload between the second clamping collar (17) and a valve seat (16) which is formed on the valve body (10).

10. Vibration damper according to one of the preceding claims, **characterized in that** the valve arrangement (3) comprises a second pressure space (24), which is hydraulically connected to the working space (B) remote from the piston rod, wherein provision is made of a device (27, 28) for changing a preload of the compression stage damping valve (5) in a manner dependent on a frequency (F) of the piston rod movement, wherein the device (27, 28) comprises an actuation element (27) which is able to be subjected to a pressure which, as a result of a compression stage movement of the piston rod (2), is established in a frequency-dependent manner in the second pressure space (24), said actuation element being able to be adjusted such that the preload of the compression stage damping valve (5) is increased.

11. Vibration damper according to Claim 10, **characterized in that** the device for changing a preload of the compression stage damping valve (5) comprises a lever element (28), wherein, by way of the lever element (28), an adjustment movement of the actuation element (27) is able to be converted into an additional preload force, which increases the preload of the compression stage damping valve (5).

12. Vibration damper according to Claim 11, **characterized in that** the lever element (28) is of circular ring-shaped form and comprises an outer diameter (D) and an inner diameter (d) and also a pressure compensation opening (29).

13. Vibration damper according to Claim 11 or 12, **characterized in that** the lever element (28) and the actuation element (27) are arranged in a hollow-cylindrical region (36) of the valve body (10), wherein, as a result of an increase in the pressure in the second pressure space (24), the actuation element (27) is able to be displaced in the direction of the lever element (28).

14. Vibration damper according to one of Claims 10 to 13, **characterized in that** the actuation element (27) comprises a circular disc-shaped main body (29) with a base surface (30), wherein the base surface (30) is able to be subjected to the pressure which, as a result of a compression stage movement of the piston rod (2), is established in a frequency-dependent manner in the second pressure space (24).

15. Vibration damper according to Claim 14, **characterized in that** the actuation element (27) comprises a hollow-cylindrical jacket (31) which extends from the main body (29) in the direction of the lever element (28), or **in that** the actuation element (27) comprises multiple web elements (32) which extend from the main body (29) in the direction of the lever element (28) and which are arranged distributed over the circumference of the main body (29), wherein an end surface (23) of the hollow-cylindrical jacket (31) or end surfaces (33) of the web elements (32) face the lever element (28).

## Revendications

1. Amortisseur de vibrations, comprenant
1.1. un tube d'amortisseur (1),
1.2. une tige de piston (2), qui est déplaçable de façon oscillante en un mouvement de phase de traction hors du tube d'amortisseur (1) et en un mouvement de phase de compression dans le tube d'amortisseur (1), dans lequel le tube d'amortisseur (1) est divisé en une chambre de travail côté tige de piston (A) et une chambre de travail à l'opposé de la tige de piston (B),
1.3. un ensemble de soupape (2) pouvant être entraîné avec la tige de piston (3), présentant
1.3.1. un corps de soupape (10),
1.3.2. une soupape d'amortissement de la phase de traction (4) active dans un mouvement de phase de traction de la tige de piston (2),
1.3.3. une soupape d'amortissement de la phase de compression (5) active dans un mouvement de phase de compression de la tige de piston (2),
1.3.4. une première chambre de pression (6), qui est reliée hydrauliquement à la chambre de travail côté tige de piston (A),
1.4. un système (7, 8) pour changer une précontrainte de la soupape d'amortissement de la phase de traction (4) en fonction d'une fréquence (F) du mouvement de la tige de piston, dans lequel le système (7, 8) présente un élément d'actionnement (7), qui peut être soumis à une pression s'établissant dans la première chambre de pression (6) en fonction de la fréquence par suite d'un mouvement de phase de traction de la tige de piston (2) et qui est réglable de telle manière que la précontrainte de la soupape d'amortissement de la phase de traction (4) soit accrue,
**caractérisé en ce que**
1.5. le système pour changer une précontrainte de la soupape d'amortissement de la phase de traction (4) présente un élément de levier (8), dans lequel
1.6. un mouvement de réglage de l'élément d'actionnement (7) peut être converti par l'élément de levier (8) en une force de précontrainte additionnelle augmentant la précontrainte de la soupape d'amortissement de la phase de traction (4).

2. Amortisseur de vibrations selon la revendication 1, **caractérisé en ce que** l'élément de levier (8) est réalisé en forme d'anneau circulaire et présente un diamètre extérieur (D) et un diamètre intérieur (d) ainsi qu'une ouverture d'équilibrage de pression (9).

3. Amortisseur de vibrations selon l'une quelconque des revendications précédentes, **caractérisé en ce que** l'élément de levier (8) et l'élément d'actionnement (7) sont disposés dans une région cylindrique creuse (18) du corps de soupape (10), dans lequel l'élément d'actionnement (7) est déplaçable en direction de l'élément de levier (8) par suite d'une augmentation de la pression dans la première chambre de pression (6).

4. Amortisseur de vibrations selon l'une quelconque des revendications précédentes, **caractérisé en ce que** l'élément d'actionnement (7) présente un corps de base en forme de disque circulaire (19) avec une face de base (20), dans lequel la face de base (20) peut être soumise à la pression s'établissant dans la première chambre de pression (6) en fonction de la fréquence par suite d'un mouvement de phase de traction de la tige de piston (2).

5. Amortisseur de vibrations selon la revendication 4, **caractérisé en ce que** l'élément d'actionnement (7) présente une face latérale cylindrique creuse (21) s'étendant à partir du corps de base (19) en direction de l'élément de levier (8) ou **en ce que** l'élément d'actionnement (7) présente plusieurs éléments de nervure (22) s'étendant à partir du corps de base (19) en direction de l'élément de levier (8) et disposés de façon répartie sur la périphérie du corps de base (19), dans lequel une face frontale (23) de la face latérale cylindrique creuse (21) ou des faces frontales (23) des éléments de nervure (22) est/sont tournée(s) vers l'élément de levier (8).

6. Amortisseur de vibrations selon la revendication 5, **caractérisé en ce que** le diamètre de la face latérale cylindrique creuse (21) correspond au diamètre extérieur (D) de l'élément de levier (8) ou le diamètre du cercle périphérique, sur lequel les éléments de nervure (22) sont disposés de façon répartie, correspond au diamètre intérieur (D) de l'élément de levier (8).

7. Amortisseur de vibrations selon l'une quelconque des revendications précédentes, **caractérisé en ce qu'**il est prévu un élément de serrage (11), qui est disposé de façon déplaçable dans la direction axiale du tube d'amortisseur (1) dans un alésage (13) du corps de soupape (10), dans lequel l'élément de levier (8) est maintenu en direction axiale à son diamètre intérieur (d) au moins par emboîtement entre l'élément de serrage (11) et le corps de soupape (10).

8. Amortisseur de vibrations selon la revendication 7, **caractérisé en ce que** l'élément de serrage (11) présente un premier rebord de serrage (15), dans lequel l'élément de levier (8) est maintenu en direction axiale à son diamètre intérieur (d) au moins par emboîtement entre le premier rebord de serrage (15) et le corps de soupape (10).

9. Amortisseur de vibrations selon une revendication 7 ou 8, **caractérisé en ce que** la soupape d'amortissement de la phase de traction (4) présente un paquet de disques de soupape (14), et **en ce que** l'élément de serrage (11) présente un deuxième rebord de serrage (17), dans lequel le paquet de disques de soupape (14) est maintenu sous précontrainte entre le deuxième rebord de serrage (17) et un siège de soupape (16) formé sur le corps de soupape (10).

10. Amortisseur de vibrations selon l'une quelconque des revendications précédentes, **caractérisé en ce que** l'ensemble de soupape (3) présente une deuxième chambre de pression (24), qui est reliée hydrauliquement à la chambre de travail à l'opposé de la tige de piston (B), dans lequel il est prévu un système (27, 28) pour changer une précontrainte de la soupape d'amortissement de la phase de compression (5) en fonction d'une fréquence (F) du mouvement de la tige de piston, dans lequel le système (27, 28) présente un élément d'actionnement (27), qui peut être soumis à une pression s'établissant dans la deuxième chambre de pression (24) en fonction de la fréquence par suite d'un mouvement de phase de compression de la tige de piston (2) et qui est réglable de telle manière que la précontrainte de la soupape d'amortissement de la phase de compression (5) soit accrue.

11. Amortisseur de vibrations selon la revendication 10, **caractérisé en ce que** le système pour changer une précontrainte de la soupape d'amortissement de la phase de compression (5) présente un élément de levier (28), dans lequel un mouvement de réglage de l'élément d'actionnement (27) peut être converti par l'élément de levier (28) en une force de précontrainte additionnelle augmentant la précontrainte de la soupape d'amortissement de la phase de compression (5).

12. Amortisseur de vibrations selon la revendication 11, **caractérisé en ce que** l'élément de levier (28) est réalisé en forme d'anneau circulaire et présente un diamètre extérieur (D) et un diamètre intérieur (d) ainsi qu'une ouverture d'équilibrage de pression (29).

13. Amortisseur de vibrations selon une revendication 11 ou 12, **caractérisé en ce que** l'élément de levier (28) et l'élément d'actionnement (27) sont disposés dans une région cylindrique creuse (36) du corps de soupape (10), dans lequel l'élément d'actionnement (27) est déplaçable en direction de l'élément de levier (28) par suite d'une augmentation de la pression dans la deuxième chambre de pression (24).

14. Amortisseur de vibrations selon l'une quelconque des revendications 10 à 13, **caractérisé en ce que** l'élément d'actionnement (27) présente un corps de base en forme de disque circulaire (29) avec une face de base (30), dans lequel la face de base (30) peut être soumise à la pression s'établissant dans la deuxième chambre de pression (24) en fonction de la fréquence par suite d'un mouvement de phase de compression de la tige de piston (2).

15. Amortisseur de vibrations selon la revendication 14, **caractérisé en ce que** l'élément d'actionnement (27) présente une face latérale cylindrique creuse (31) s'étendant à partir du corps de base (29) en direction de l'élément de levier (28) ou **en ce que** l'élément d'actionnement (27) présente plusieurs éléments de nervure (32) s'étendant à partir du corps de base (29) en direction de l'élément de levier (28) et disposés de façon répartie sur la périphérie du corps de base (29), dans lequel une face frontale (33) de la face latérale cylindrique creuse (31) ou des faces frontales (33) des éléments de nervure (32) est/sont tournée(s) vers l'élément de levier (28).
